Europäisches Patentamt

European Patent Office

Office européen des brevets

(11) Veröffentlichungsnummer: **0 303 032**
**A1**

## (12) EUROPÄISCHE PATENTANMELDUNG

(21) Anmeldenummer: 88110074.7

(22) Anmeldetag: 24.06.88

(51) Int. Cl.4: **C01C 1/04**

(30) Priorität: 01.08.87 DE 3725564

(43) Veröffentlichungstag der Anmeldung:
15.02.89 Patentblatt 89/07

(84) Benannte Vertragsstaaten:
**DE FR GB IT NL**

(71) Anmelder: **Uhde GmbH**
**Friedrich-Uhde-Strasse 15**
**D-4600 Dortmund 1(DE)**

(72) Erfinder: **Herbort, Hans-Joachim, Dipl.-Ing.**
**Unnaer Strasse 65B**
**D-5758 Fröndenberg(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) Verfahren und Anlage zur Durchführung einer Synthese, insbesondere zur Synthese von Ammoniak.

(57) Bei einem Verfahren und einer Anlage zur Durchführung einer Synthese, insbesondere der Synthese von Ammoniak, sollen die Vorteile der bekannten Innenbettkühlung einerseits bzw. der kühlung nach dem Katalysatorbett andererseits beide nutzbar gemacht werden, was dadurch geschieht, daß bei einer Mehrzahl von hintereinander geschalteten Katalysatorbetten (1,4,9) nach der Kühlung des Reaktionsgases nach dem ersten Katalysatorbett (2) wenigstens in einem folgenden Katalysatorbett (9) eine Innenkühlung durchgeführt wird.

EP 0 303 032 A1

"Verfahren und Anlage zur Durchführung einer Synthese, insbesondere zur Synthese von Ammoniak"

Die Erfindung richtet sich auf ein Verfahren und eine Anlage zur Durchführung einer Synthese, insbesondere der Synthese von Ammoniak, mit einer Mehrzahl von hintereinander geschalteten Katalysatorbetten und mit Einrichtungen zur Kühlung des Reaktionsgases.

Bei exothermen chemischen Reaktionen in Katalysatoren heizt sich naturgemäß das Reaktionsgas laufend auf, so daß es, um optimale Bedingungen beizubehalten bzw. immer wieder zu erreichen, gekühlt werden muß. Bei der Kühlung gibt es grundsätzlich zwei unterschiedliche Vorgehensweisen: Die eine besteht darin, innerhalb eines Katalysatorbettes, in dem die gesamte Reaktion vorgenommen wird, durch innenliegende Kühleinrichtungen zu kühlen (DE-PS 1 442 941), die andere Möglichkeit besteht darin, das Katalysatorbett in eine Mehrzahl von Katalysatorbetten aufzuteilen und das Reaktionsgas jeweils nach Verlassen eines Katalysatorbettes einem Dampferzeuger oder sonstigem Wärmetauscher zuzuführen, um es dann gekühlt in das nächste Katalysatorbett einzuleiten (WO 86/06058).

Beide Vorgehensweisen haben gewisse Vorteile, allerdings auch Nachteile, so sind großen Einzelreaktoren, bei denen die vollständige Reaktion und die notwendige Wärmeabfuhr in einer Einheit zusammengefaßt sind, konstruktiv sehr aufwendig, während die jeweilige Kühlung nach Verlassen eines Katalysatorbettes eine optimale katalytische Reaktion zwangsläufig nur im engen Bereich zuläßt.

Aufgabe der Erfindung ist die Schaffung einer Lösung, mit der die Vorteile beider Systeme nutzbar gemacht werden, wobei gleichzeitig der apparative Aufwand verringert und die katalytischen Reaktionen optimiert werden können.

Mit einen Verfahren der eingangs bezeichneten Art wird diese Aufgabe gemäß der Erfindung dadurch gelöst, daß in der Kühlung des Reaktionsgases nach dem ersten Katalysatorbett wenigstens in einem folgenden Katalysatorbett eine Innenkühlung durchgeführt wird.

Eine Innenkühlung des ersten Katalysatorbettes stößt auf technische Schwierigkeiten, da dieses Bett in der Regel vergleichsweise klein ist gemessen an der abzuführenden Wärme. Hier bietet sich z.B. die bekannte nachgeschaltete Kühlung durch das kalte Prozeßgas selbst als Vorwärmstufe an. Die nachfolgenden Betten können dann aber bereits mit einer Innenkühlung vorgesehen sein, wobei die Innenkühlung auch zur Teilkühlung herangezogen werden kann, d.h. eine Innenkühlung kann mit einer nachfolgenden Kühlung außerhalb des Katalysatorbettes kombiniert werden.

Die Erfindung sieht in besonderer Ausgestaltung vor, daß bei drei Katalysatorbetten im letzten Katalysatorbett die direkte Innenkühlung vorgenommen wird.

Gerade bei der Ammoniaksynthese werden bei drei Katalysatorbetten die Katalysatorvolumina nicht gleich gewählt, sondern etwa in einem Verhältnis 1/6 zu 2/6 zu 3/6 vom ersten bis zum dritten Katalysatorbett, d.h. das letzte Katalysatorbett ist etwa so groß wie die beiden vorangehenden. Es hat sich gezeigt, daß sich dieses Katalysatorbett optimal für die Innenkühlung eignet.

Eine Innenkühlung kann in vielfacher Weise durchgeführt werden, besonders zweckmäßig ist es aber, diese Innenkühlung über eine Wasser/Dampfzirkulation durchzuführen, wobei hier als besonderer Vorteil und als besonderes Wesen der vorliegenden Erfindung eine Regelung angewandt wird, die über die Steuerung des Dampfdruckes des Kühlkreislaufes vorgenommen wird.

Die Erfindung sieht auch eine Anlage zur Durchführung des vorbeschriebenen Verfahrens vor, die sich dadurch auszeichnet, daß wenigstens ein Katalysatorbett mit einer direkten Innenkühl-Einrichtung versehen ist, wobei in besonderer Ausgestaltung diese Innenkühl-Einrichtung als das Katalysatorbett durchsetzendes Rohrsystem ausgestaltet ist, wobei das Kühlmedium Wasser/Dampf im Kreislauf geführt und im Kühlmittelkreislauf eine Dampf/Wasser-Abscheidevorrichtung vorgesehen ist.

Zur Regelung sieht die Anlage dabei vor, daß im Kreislauf des Kühlmittels eine Dampfdruckreguliereinrichtung zur Regelung der Kühlung des entsprechenden Katalysatorbettes vorgesehen ist.

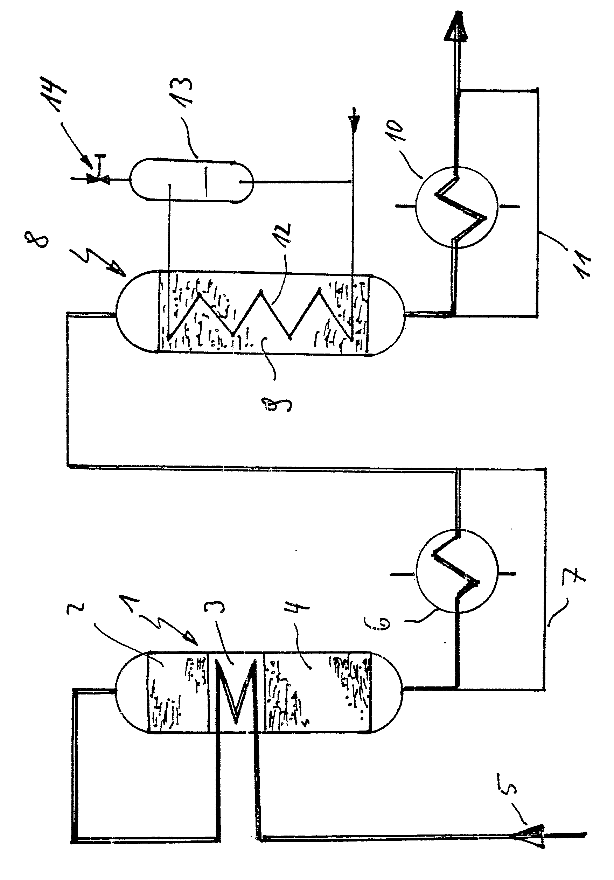

Die Erfindung ist nachstehend anhand der Zeichnung beispielsweise näher erläutert, die in der einzigen Figur eine Prinzipskizze einer lage nach der Erfindung zeigt.

In einem ersten $NH_3$-Reaktor 1 ist ein erstes Katalysatorbett 2, nachfolgend ein Wärmetauscher 3 zur Vorwärmung des Reaktionsgases sowie nachfolgend ein zweites Katalysatorbett 4 vorgesehen. Das in Richtung des Pfeiles 5 die Anlage durchströmende Reaktionsgas beaufschlagt nach Verlassen des ersten Ammoniakreaktors 1 einen folgenden Wärmetauscher 6, z.B. einen Dampferzeuger, der aber auch über eine Bypass-Leitung 7 umgangen werden kann. Nachfolgend ist ein zweiter Reaktor 8 vorgesehen mit einem dritten Katalysatorbett 9, wobei diesem Reaktor 8 ein weiterer Wärmetauscher 10 nachgeschaltet ist, der wiederum über eine Bypass-Leitung 11 umgangen werden kann.

Das Katalysatorbett 9 ist mit einer Innenkühl-Einrichtung 12 ausgerüstet, und zwar einer Wasser-Dampfkühleinrichtung, in deren geschlossenen Kreislauf eine Dampf-Wasser-Abscheidevorrichtung 13 und eine Dampfdruckregeleinrichtung 14 vorgesehen ist.

## Ansprüche

1. Verfahren zur Durchführung einer Synthese, insbesondere der Synthese von Ammoniak, mit einer Mehrzahl von hintereinander geschalteten Katalysatorbetten und mit Einrichtungen zur Kühlung des Reaktionsgases,
dadurch gekennzeichnet,
daß neben der Kühlung des Reaktionsgases nach dem ersten Katalysatorbett wenigstens in einem folgenden Katalysatorbett eine Innenkühlung durchgeführt wird.

2. Verfahren nach Anspruch 1,
dadurch gekennzeichnet,
daß bei drei Katalysatorbetten im letzten Katalysatorbett die direkte Innenkühlung vorgenommen wird.

3. Verfahren nach Anspruch 1 oder 2,
dadurch gekennzeichnet,
daß die Innenkühlung über eine Wasser-/Dampfzirkulation durchgeführt wird.

4. Verfahren nach Anspruch 3,
dadurch gekennzeichnet,
daß die Regelung der Innenkühlung über den Dampfdruck vorgenommen wird.

5. Verfahren nach einem der vorangehenden Ansprüche, dadurch gekennzeichnet,
daß die Innenkühlung als Teilkühlung des Katalysatorbettes herangezogen und eine weitere Kühlstufe dem Katalysatorbett nachgeordnet wird.

6. Anlage zur Durchführung des Verfahrens nach einen der vorangehenden Ansprüche mit N $H_3$-Reaktoren mit Katalysatorbetten,
dadurch gekennzeichnet,
daß wenigstens ein Katalysatorbett (9) mit einer direkten Innenkühl-Einrichtung (12) versehen ist.

7. Anlage nach Anspruch 5,
dadurch gekennzeichnet,
daß die Innenkühl-Einrichtung (12) von einem das Katalysatorbett (9) durchsetzenden Rohrsystem gebildet ist, wobei das Kühlmedium Wasser/Dampf im Kreislauf geführt und im Kreislauf eine Dampf/Wasser-Abscheidevorrichtung (13) vorgesehen ist.

8. Anlage nach Anspruch 5 oder 6,
dadurch gekennzeichnet,
daß im Kreislauf eine Dampfdruck-Regeleinrichtung (14) zur Regelung des Kühlkreislaufes vorgesehen ist.

**Europäisches Patentamt**

**EUROPÄISCHER RECHERCHENBERICHT**

Nummer der Anmeldung

EP 88 11 0074

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 705 141 (LINDE) * Figur 2; Ansprüche 1,9 * | 1,3-5,6 -8 | C 01 C 1/04 |
| Y | | 2 | |
| Y | WO-A-8 606 058 (S.F. BRAUN) * Ansprüche; Figur 1 * | 2 | |
| A | GB-B- 671 573 (MONTECATINI) * Insgesamt * | 6-8 | |
| A,D | DE-A-1 442 941 (UHDE) | | |

| | RECHERCHIERTE SACHGEBIETE (Int. Cl.4) |
|---|---|
| | C 01 C 1/00 |

Der vorliegende Recherchenbericht wurde für alle Patentansprüche erstellt

| Recherchenort | Abschlußdatum der Recherche | Prüfer |
|---|---|---|
| DEN HAAG | 10-11-1988 | ZALM W.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)